(19) **Europäisches Patentamt / European Patent Office / Office européen des brevets**

(11) **EP 4 641 342 A1**

(12) **EUROPEAN PATENT APPLICATION**

(43) Date of publication:
29.10.2025 Bulletin 2025/44

(21) Application number: 24171689.3

(22) Date of filing: **22.04.2024**

(51) International Patent Classification (IPC):
G05D 1/633 (2024.01)   G05D 1/243 (2024.01)
G05D 1/249 (2024.01)   G05D 1/65 (2024.01)
G05D 105/28 (2024.01)   G05D 101/20 (2024.01)
G05D 107/70 (2024.01)   G05D 109/10 (2024.01)
G05D 111/10 (2024.01)   G06V 20/00 (2022.01)

(52) Cooperative Patent Classification (CPC):
**G05D 1/633; G05D 1/243; G05D 1/249; G05D 1/65;**
**G06V 20/58; G06V 40/103;** G05D 2101/20;
G05D 2105/28; G05D 2107/70; G05D 2109/10;
G05D 2111/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: Robert Bosch GmbH
70442 Stuttgart (DE)

(72) Inventors:
• **Palmieri, Luigi**
  **70197 Stuttgart (DE)**
• **Stefanini, Elisa**
  **56121 Pisa (IT)**
• **Rudenko, Andrey**
  **70839 Gerlingen (DE)**

Remarks:
Amended claims in accordance with Rule 137(2)
EPC.

(54) **METHOD FOR CONTROLLING A ROBOT DEVICE**

(57)    A method (200) for controlling a robot device (102) is disclosed which includes: determining, using sensor data (302) representing a surrounding of the robot device, whether there are one or more humans (106) in the surrounding of the robot device; determining for each human of the one or more humans: a body pose (308) and a velocity (310) of the human, a predicted motion (306) of the human for a future time period, and, using the body pose (308), the velocity (310), and the predicted motion (306), an occupation area (320) occupied by the human in the future time period; generating control parameters (322) for controlling the robot device such that a predefined distance of the robot device (102) to the occupation area (320) of each of the one or more humans is ensured in the future time period; and controlling the robot device in accordance with the control parameters.

Fig. 3

EP 4 641 342 A1

**Description**

Prior Art

Some mobile robots can navigate autonomously within a dynamic environment, such as a factory, to, for example, transport goods within the factory. For this, a model predictive control (MPC) may be employed to control the robot autonomously within its dynamic environment.

Since humans may also move within the dynamic environment, it may be necessary to consider the human motion when navigating the robot in order to reduce the risk that the robot collides with a human. In L. Heuer et al.: "Proactive Model Predictive Control with Multi-Modal Human Motion Prediction in Cluttered Dynamic Environments", in IEEE/RJS International Conference on Intelligent RObots and Systems, 2023 (in the following referred to as reference [1]) an MPC approach is described that plans a trajectory of the robot based on predicted geometric information of the human motion.

Disclosure of the Invention

The present disclosure relates to a method for controlling a robot device which employs, in addition to the predicted geometric information of the human motion, (additional) contextual information of the humans, such as their body pose, their (current) activity, etc. This allows to control the robot in a smoother, safer, and less conservative manner. For example, the method reduces the risk that the robot collides with a human significantly.

According to various embodiments, the method for controlling a robot device includes: determining, using sensor data (e.g., including one or more camera images, lidar data, radar data, etc.) which represent a surrounding of the robot device, whether there are one or more humans in the surrounding of the robot device; in the case that it is determined that there are one or more humans in the surrounding of the robot device, determining for each human of the one or more humans: a respective body pose (e.g., a skeleton pose) and a respective velocity of the human using the sensor data, a respective predicted motion of the human (e.g., as multi-modal geometric information, such as trajectories) for a future time period using the sensor data, using the (determined) respective body pose, the (determined) respective velocity, and the (determined) respective predicted motion, a respective occupation area occupied by the human in the future time period; and generating control parameters (e.g., including a robot trajectory) for controlling the robot device such that a predefined (minimum) distance of the robot device to the respective occupation area of each of the one or more humans is ensured in the future time period (e.g., to thereby avoid collision of the robot device with the one or more humans); and controlling (e.g., navigating) the robot device in accordance with the (generated) control parameters.

Illustratively, the method provides an MPC planner which employs both, geometric information of human motion (i.e., the respectively predicted motion of the humans) and (additional) contextual information of the human motion (i.e., the respective body pose and the respective velocity of the humans), thereby having an improved understanding of human motion and, hence, allowing an improved human-aware control of the robot.

In the following, various examples are described.

Example 1 is the method for controlling a robot device as described above.

In Example 2, the method of Example 1 can optionally further include: for each human of the one or more humans, determining a respective activity of the human using the sensor data; wherein generating the control parameters includes determining a velocity of the robot device using the (determined) respective activity of each of the one or more humans.

In Example 3, the subject matter of Example 2 can optionally include that determining the velocity of the robot device includes determining an average level of human activity in the surrounding of the robot device using the respective activity of each of the one or more humans; and determining, using the average level of human activity, the velocity of the robot device by decreasing a predefined robot velocity (e.g., a predefined socially acceptable velocity) with an increasing average level of human activity.

According to Examples 2 and 3, the robot device decelerates based on the average level of human activity. This reduces the risk that the robot device collides with a human and also reduces the discomfort of the one or more humans.

In Example 4, the subject matter of any one of Examples 1 to 3 can optionally include that determining the respective occupation area occupied by the human at a point in time (e.g., associated with a robot state) in the future time period includes: determining, using the respective body pose of the human, a respective body pose area (e.g., as an ellipse) occupied by the human; and determining, using the respective velocity of the human, the respective occupation area by increasing the respective body pose area with increasing velocity of the human.

In Example 5, the subject matter of Example 4 can optionally include that determining the respective body pose area occupied by the human includes: projecting a respective two-dimensional ellipse onto a ground on which the robot device is positioned, the two-dimensional ellipse bounding the respective body pose of the human in a plan view; and wherein determining the respective occupation area includes: increasing a size of the respective two-dimensional ellipse as a function of the respective velocity of the human, wherein the size of the respective two-dimensional ellipse increases with increasing velocity of the human.

According to Examples 4 and 5, not only the current position of the respective human is considered when ensuring a distance between the robot device and the human, but an occupation area of the human is considered in which the human may interact. Here, the human may have a larger ellipse area of interacting when having a greater speed and vice versa. Using this elliptical occupation area of the human as distance constraint instead of only the current position allows to significantly reduce the risk that the robot device collides with the human.

Example 6 is a robot device controller configured to carry out the method of any one of Examples 1 to 5.

Example 7 is a robot device including: the robot device controller according to Example 6; and at least one perception sensor configured to acquire the sensor data representing the surrounding of the robot device.

Example 8 is a computer program including instructions which, when executed by a computer, causes the computer to carry out the method according to any one of Examples 1 to 5.

Example 9 is a computer-readable (e.g., non-volatile and/or non-transitory memory) medium including instructions which, when executed by a computer, causes the computer to carry out the method according to any one of Examples 1 to 5.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a robot device arrangement according to various aspects;
Figure 2 shows a flow diagram of a method for controlling a robot device according to various aspects;
Figure 3 shows an exemplary flow chart for controlling the robot device according to various aspects;
Figure 4 shows a schematic illustrating an exemplary determination of a distance between the robot device and an occupation area occupied by a human according to various aspects; and
Figure 5 shows exemplary human skeleton poses for exemplary activities.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

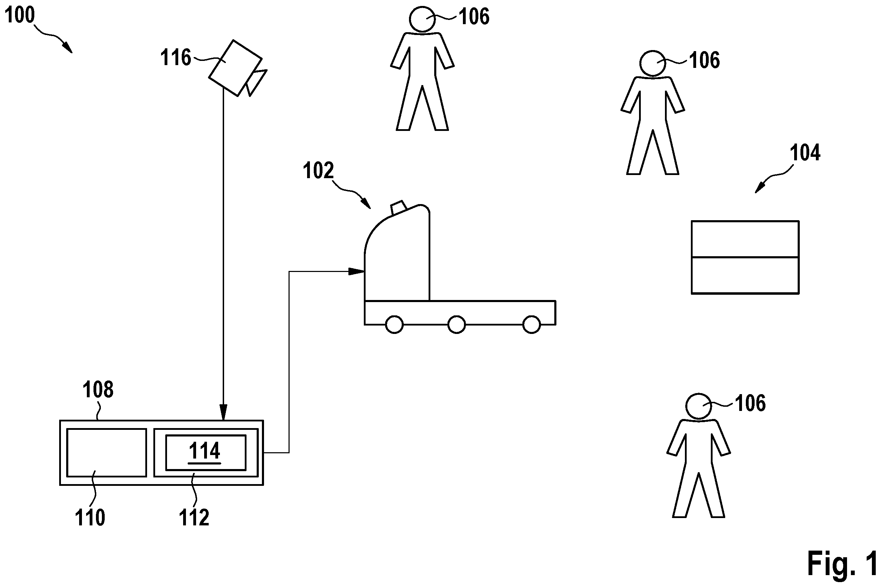

**FIG.1** shows a robot device arrangement 100 according to various aspects. The robot device arrangement 100 may include a robot device 102 (short: robot). The robot device 102 shown in FIG.1 and described below by way of example is an exemplary robot device serving for illustration and may include, for example, a transport robot for transporting objects (e.g., goods) 104 within a dynamic environment, such as a factory. It is noted that this robot device serves for illustration and may, in general, be any type of robot that is capable to navigate (e.g., autonomously or at least semi-autonomously). As an example, the robot device 102 may be an Active Shuttle from Bosch Rexroth. The robot device 102 may be configured to be moveable (e.g., drivable) on ground. For this, the robot device 102 may include, for example, wheels or any other suitable component (e.g., crawler tracks, support legs, etc.). Hence, the robot device 102 may be a ground-driven robot device.

For control of the robot device 102, the robot device arrangement 100 may include a (robot) controller 108 configured to implement the interaction with the (dynamic) environment according to a control program. In some aspects, the robot device 102 may include the controller 108. In other aspects, the robot device arrangement 100 may include the (central) controller 108 configured to control one or more than one robot device 102. In even other aspects, the robot device 102 may include a controller which implements a part of the controller 108 and another (central) controller may include another part of the controller 108 described herein.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 108 may include one or more processors 110 and a memory 112 storing code and data based on which the processor 110 controls the robot device 102. According to various embodiments, the controller 108 controls the robot device 102 on the basis of a control model (e.g. employing a model predictive control, MPC) 114 stored in the memory 112.

To be able to navigate the robot device 102 in its (dynamic) environment, the controller 108 may use sensor data which represent the environment and, thus, the surrounding of the robot device 102. As an example, the sensor data may include images of the surrounding of the robot device 102 which are provided by one or more imaging sensors 116. At least one of the one or more imaging sensors 116 may be attached to the robot device 102 and/or at least one of the one or more imaging sensors 116 may be separate from the robot device 102 (e.g., to have a view for observing more than one robot device 102.

An imaging sensor, as used herein, may be, for example, a camera (e.g., a standard camera, a digital camera, an infrared camera, a stereo camera, etc.), a radar sensor, a LIDAR sensor, an ultrasound sensor, etc. Thus, an image may be an RGB image, an RGB-D image, or a depth image (also referred to as a D image). A depth image described herein may be any type of image that includes depth information. Illustratively, a depth image may have 3-dimensional information about one or more objects. For example, a depth image described herein may include a point cloud provided by a LIDAR sensor and/or a radar sensor. For example, a depth image may be an image with depth information provided by a LIDAR sensor.

It is understood that the one or more imaging sensors 116 serve as examples and that the robot device arrangement 100 may include any other kind of one or more perception sensors.

The controller 108 may be configured to control the robot device 102 based on an output of the control model 114 responsive to inputting at least one image into the control model 114.

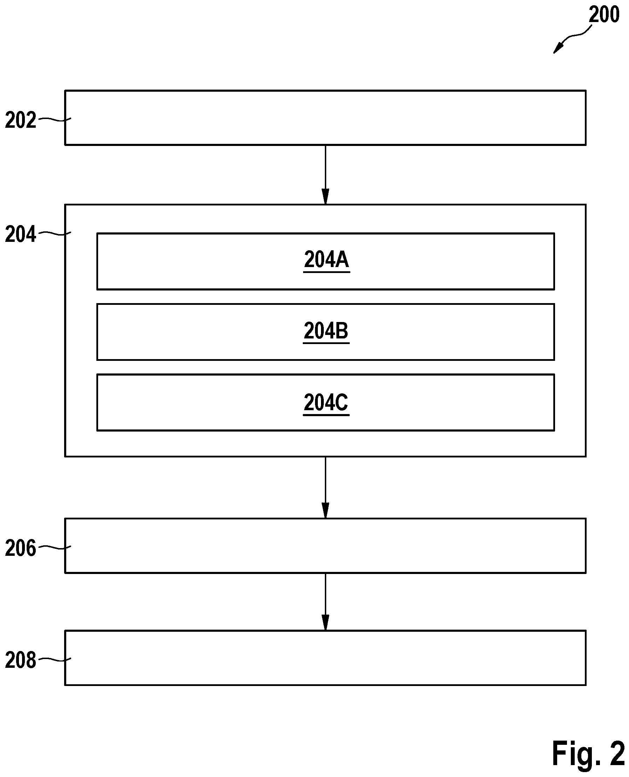

As detailed herein, the dynamic environment may include one or more humans 106. **FIG.2** shows a flow diagram of a (e.g., computer-implemented) method 200 for controlling a robot device (e.g., the robot device 102) according to various aspects. In order to prohibit a collision between the robot device 102 and the one or more humans 106, the method 200 considers a respective behavior (e.g., motion, activity, etc.) of each of the one or more humans 106 when navigating the robot device 102. In particular, the method 200 employs, in addition to predicted geometric information of the human motion (e.g., their predicted motion), (additional) contextual information of the humans, such as their body pose, their velocity, their (current) activity, etc.

The method 200 may include (in 202) determining (using the sensor data 302 which represent a surrounding of the robot device 102), whether there are one or more humans 106 in the surrounding of the robot device 102.

In the case that it is determined that there are one or more humans 106 in the surrounding of the robot device 102, the method 200 may include (in 204) determining for each human of the one or more humans 106: a respective body pose (e.g., a skeleton pose) and a respective velocity of the human (in 204A), a respective predicted motion of the human (e.g., as multi-modal geometric information, such as a trajectory) for a future time period (in 204B), and (using the respective body pose, the respective velocity, and the respective predicted motion) a respective occupation area occupied by the human in the future time period (in 204C).

The method 200 may include (in 206) generating control parameters (e.g., a control signal) for controlling the robot device 102 such that a predefined (minimum) distance of the robot device 102 to the respective occupation area of each of the one or more humans 106 is ensured in the future time period. By this, a collision risk of the robot device 102 with the one or more humans 106 is significantly reduced.

The method 200 may include (in 208) controlling (e.g., navigating) the robot device 102 in accordance with the control parameters

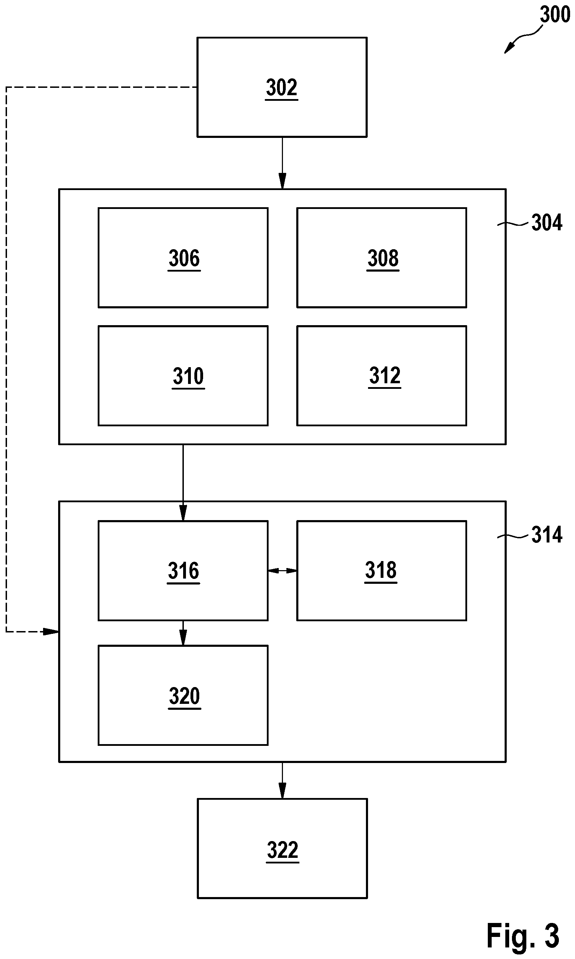

In the following, various aspects of the method 200 are described in further detail. **FIG.3** shows an exemplary flow chart 300 for controlling the robot device 102 according to various aspects.

The method 200 may include a determination of contextual information 304 using the sensor data 302. The contextual information 304 may include a respective predicted motion 306 of each of the one or more humans 106 (e.g., as multi-modal geometric information as detailed in reference [1]). The contextual information 304 may further include a respective body pose 308 (e.g., a skeleton pose) and a respective velocity 310 of each of the one or more humans 106. Optionally, the contextual information 304 may further include a respective activity 312 of each of the one or more humans 106. For example, the controller 108 may include a human motion prediction module configured to determine, using the sensor data 302, the predicted motion 306 of each human of the one or more humans 106. For example, the controller 108 may include a perception module configured to determine, using the sensor data 302, the respective body pose 308, the respective velocity 310, and optionally further the respective activity 312 of each of the one or more humans 106.

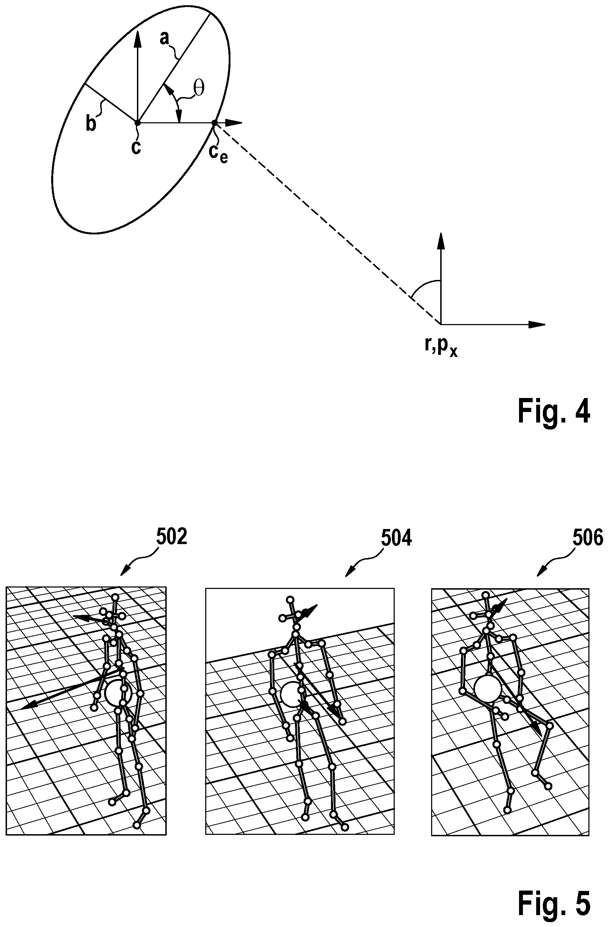

A body pose, as detailed herein, may be a three-dimensional body pose, such as a skeleton pose. A skeleton pose may include joints of the entire body of the associated human. Exemplary skeleton poses are shown in FIG.5.

The controller 108 may implement a robot navigation stack 314. The robot navigation stack 314 may include a local planning model 316 (short: local planner) which is configured to implement the context-aware MPC detailed herein. The local planning model 316 may interact with a global planning model 318 (short: global planner) which is configured to consider the respective navigation of a plurality of robot devices. The local planning model 316 and/or the global planning model 318 may employ at least part of the sensor data 302 and/or additional sensor data for decision making.

The local planning model 316 may implement the context-aware MPC approach based on equation (1):

$$\min_{x(\cdot),u(\cdot)} \sum_{n=0}^{N-1} \left( J_{stage}\big(x(n), u(n), g(n), o(\cdot, n)\big) \right) + \left( J_{terminal}\big(x(N), g(N), o(\cdot, N)\big) \right) \quad (1),$$

being subject to:

$$x(n) \in X \qquad\qquad n \in [0, N]$$

$$u(n) \in U \qquad\qquad n \in [0, N-1]$$

$$d\left(p_{x(n)}, o(i,n)\right) \geq d_{human\_min} \qquad\qquad n \in [0, N]; \; i \in [1, N_{humans}]$$

$$d\left(p_{x(n)}, o_s\right) - s \geq d_{s\_min} \qquad\qquad n \in [0, N],$$

wherein $n$ indicates a respective point in time in the future time period, $N$ is the prediction horizon of the future time period, $x(n)$ is the robot state at time n, $X$ is the allowed robot states, $u(n)$ is the robot control at time n, $U$ is the allowed control spaces, $g(n)$ is the goal at time n,
$i$ indicates a respective human of a total number, $N_{humans}$, of the one or more humans 106,
$o(i, n)$ is the position of human $i$ at time n, $p_{x(n)}$ is the robot position at time n, $o_s$ is the position of the nearest static obstacle, $d_{s\_min}$ is the constraint of the predefined minimum distance to the nearest static obstacle, and $d_{human\_min}$ is the predefined (minimum) distance of the robot device 102 to each of the one or more humans, $i$, 106.

The cumulative stage cost $J_{stage}$ may be given by equation (2):

$$J_{stage}\left(x(n), u(n), g(n), o(\cdot, n)\right) = J_g\left(x(n), g(n)\right) + J_u\left(u(n)\right) + J_{col}\left(x(n), o(\cdot, n)\right) \qquad (2),$$

wherein $J_g$ is the goal cost term representing the cost to goal, $J_u$ is the control cost term representing the control effort, and $J_{col}$ is the collision cost used to avoid a collision of the robot device 102 with the surrounding obstacles and the one or more humans 106.
The terminal cost $J_{terminal}$ may be given by equation (3):

$$J_{terminal}\left(x(N), g(n), o(\cdot, N)\right) = J_g\left(x(N), g(N)\right) + J_{col}\left(x(N), o(\cdot, N)\right) \qquad (3).$$

Penalizing the distance to the given goal may be achieved by the goal cost term $J_g\left(x(n), g(n)\right) = ||x(n) - g(n)||^2_{w_g}$ ; $n \in [0, N]$ weighted by the diagonal matrix $w_g$. The control may be penalized using the control cost term $J_u\left(u(n)\right) = ||u(n)||^2_{w_u}$ ; $n \in [0, N-1]$ weighted by the diagonal matrix $w_g$.
According to various aspects, the collision cost term $J_{col}$ may take the predicted motion 306, the respective body pose 308, and the respective velocity 310 of each of the one or more humans, $i$, 106 into account. The collision cost term $J_{col}$ may be given by equation (4):

$$J_{col}\left(x(n), o(\cdot, n)\right) = \sum_{i=1}^{N_{human}} f\left(d\left(p_{x(n)}, o(i,n)\right)\right) \qquad (4),$$

with $f(d(p_{x(n)}, o(i, n)))$ being defined as:

$$\begin{cases} \left(-\dfrac{kq}{4}\right) d\left(p_{x(n)}, o(i,n)\right) + \left(\dfrac{q}{2} + \dfrac{kq}{4} r_{th}\right) & if \; d\left(p_{x(n)}, o(i,n)\right) \leq r_{th} \\[4mm] \dfrac{q}{1 + e^{k\left(d\left(p_{x(n)}, o(i,n)\right) - r_{th}\right)}} & if \; d\left(p_{x(n)}, o(i,n)\right) > r_{th} \end{cases}$$

with $r_{th}$ being a predefined threshold distance, $k$ being a (predefined) smoothness parameter, and $q = 2 r_{th}$.
As detailed in the following, the distance $d\left(p_{x(n)}, o(i,n)\right)$ between the robot device 102 and a respective human, $i$, of the one or more humans 106 may be determined using the respective body pose 308 and the respective velocity 310 of the human $i$.
The controller 108 may be configured to determine a respective occupation area 320 occupied by the human $i$ in the future time period (from n=0 to n=N) using the respective body pose 308 and the respective velocity 310 of the human $i$. For this, the controller 108 may determine, using the respective body pose 308 of the human $i$, a respective body pose area occupied by the human $i$ and may then increase this respective body pose area as a function respective velocity of the human $i$. The respective body pose area may be increased with increasing velocity of the human $i$.

The respective body pose area occupied by the human $i$ may be a two-dimensional ellipse determined by projecting a respective two-dimensional ellipse onto the ground on which the robot device 102 is positioned such that the two-dimensional ellipse bounds the respective body pose 308 of the human $i$ in a plan view. Illustratively, the respective body pose area may be a two-dimensional ellipse having a minimum size to bound (e.g., include) all points of the respective body pose 308. For example, the respective body pose 308 may be a skeleton pose including the joints of the human body; these joints may be projected to the ground and then the respective two-dimensional ellipse may be determined to bound these projected joints.

The size of this two-dimensional ellipse may then be increased as a function of the respective velocity 310 of the human $i$, thereby determining the respective occupation area 320 occupied by the human $i$.

As an example, a linear velocity $v_h$ of the human i may be determined using a velocity in x-direction $v_{hx}$ and a

$$v_h = \sqrt{v_{hx}^2 + v_{hy}^2}$$

velocity in y-direction $v_{hy}$ by: . In this example, an ellipse axis enlargement $e$ may be determined by: $e = |\tanh(1.5 v_h)|$. Both, the major axis and the minor axis of the two-dimensional ellipse, may then be increased by the ellipse axis enlargement $e$. It is understood that this serves as an example and that the increase of the two-dimensional ellipse may be determined using any other suitable function. However, it is found that using the tanh provides a significant reduction of the collision risk between the robot device 102 and the human $i$.

The distance $d$ ($p_{x(n)}$, $o(i,n)$) between the robot device 102 and the human $i$ may then be a minimum distance between the position $p_{x(n)}$ of the robot device 102 and the two-dimensional ellipse. With reference to **FIG.4,** the ellipse point $c_e$ represents the point on the perimeter of the two-dimensional ellipse which is closest to the robot position $p_{x(n)}$ at an exemplary at time n. For human , the ellipse point $c_e$ at time n may then correspond to $o(i, n)$. The robot device 102 may be positioned at robot position $p_{x(n)}$ with a robot pose $r = [r_x, r_y]$. The human $i$ may be positioned within the respective occupation area 320 given by the two-dimensional ellipse with ellipse center $c = [c_x, c_y]$.

To determine the ellipse point $c_e$, the coordinate system may be shifted and rotated such that the ellipse is centered in the origin and that the major axis, a, and the minor axis, b, of the ellipse is in line with the x-axis and the y-axis;

$$r_{new} = R^T (r - c) \text{ with } R = \begin{bmatrix} \cos(\theta) & -\sin(\theta) \\ \sin(\theta) & \cos(\theta) \end{bmatrix}$$

respectively. Then, a new robot pose $r_{new}$ may be determined by: and $\theta$ being the rotation angle.

The human-specific (minimum) distance d ($p_{x(n)}$, $o(i, n)$) may be determined by optimizing the square distance $D^2$ between the ellipse and the robot pose by: $D^2 = (c_e - r_{new})(c_e - r_{new})$ (using Newton's method).

Using the human-specific (minimum) distance $d$ ($p_{x(n)}$, $o(i, n)$) based on the respective occupation area 320 reduces the risk that the robot device 102 collides with a human of the one or more humans 106 and also reduces discomfort of the humans since the robot device 102 avoids them.

According to various aspects, a velocity cost $J_{vel}$ may be added to the cumulative stage cost $J_{stage}$ and the terminal cost $J_{terminal}$ giving:

$$J_{stage} (x(n), u(n), g(n), o(\cdot, n)) = J_g(x(n), g(n)) + J_u(u(n)) + J_{col}(x(n), o(\cdot, n)) + J_{vet}(x(n), o(\cdot, n)) \tag{5},$$

$$J_{terminal}(x(N), g(n), o(\cdot, N)) = J_g(x(N)g(N)) + J_{col}((x(N), o(\cdot, N)) + J_{vet}(x(N), o(\cdot, N)) \tag{6},$$

The velocity cost $J_{vel}$ may include the respective activity 312 of each human $i$ of the one or more humans 106. The controller 108 may be configured to determine the respective activity 312 of a human $i$ using the sensor data 302 (e.g., using the respective body pose 308). An activity 312 may be associated with a corresponding activity factor, $\alpha_i$, representing a degree or level of activity. In an example, the activity factor, $\alpha_i$, may be $\alpha_i \in [0,1]$ with a higher value of $\alpha_i$ representing a higher level of activity. For example, an activity factor, $\alpha_i$, associated with sitting may be lower than an activity factor, $\alpha_i$, associated with walking. It is understood that this serves as an example and that the relationship may be vice versa. **FIG.5** shows an exemplary skeleton pose 502 for the activity standing, an exemplary skeleton pose 504 for the activity walking, and an exemplary skeleton pose 506 for the activity sitting. The activity factor, $\alpha_i$, associated with a corresponding activity may be predefined (e.g., offline) and/or may be learning during use of the robot device 102.

The velocity cost $J_{vel}$ may be given by $J_{vel}(x(n), o(-, n)) = w_h |v_r - v_{des}|^2$ weighted by the diagonal matrix $w_h$, wherein $v_r$ is the robot velocity and $v_{des}$ is the desired robot velocity.

The controller 108 may be configured to determine an average level of human activity, A, in the surrounding of the robot device 102 using the respective activity factor, $\alpha_i$, of each of the one or more humans 106. For example, the average level of human activity, A, may be an average of the activity factor, $\alpha_i$, of the one or more humans 106 given by:

$$A = \frac{1}{N_{human}} \sum_{i=0}^{N_{human}} \alpha_i$$

Illustratively, the average level of human activity $A$ may be a local human activity in the surrounding of the robot device 102.

In the case that the one or more humans 106 are present in the surrounding of the robot device 102, the desired robot velocity $v_{des}$ may be limited by a socially acceptable velocity $v_{social,max}$ (e.g., being half a maximum velocity of the robot device 102). The desired robot velocity $v_{des}$ may be determined by: $v_{des} = (1 - A) \cdot v_{social,max}$.

Illustratively, the velocity cost $J_{vel}$ moderates the robot velocity as a function of human activity in the surrounding of the robot device 102. Thus, the robot device 102 decelerates based on the average level of human activity. This also reduces the risk that the robot device 102 collides with a human of the one or more humans 106 and also reduces the discomfort of the humans since the robot device 102 decelerates when being closer to them.

The controller 108 may be configured to generate the control parameters 322 (e.g., as a control signal) using equation (1). The controller 108 may determine the human-specific (minimum) distance $d\,(p_{x(n)},\,o(i,\,n))$ employing the respective occupation area 320 as detailed above and/or equation (1) may include the velocity cost term $J_{vel}$ according to equations (5) and (6). According to various aspects, the control parameters 322 may represent a robot trajectory. The robot trajectory may be determined using the software ACADOS for optimization. The method 200 allows the robot device 102 to generate smoother, safer and less conservative trajectories which are also more legible by the humans.

While in the above embodiments, the approach of FIG.2 is applied to control the robot device 102, it may be applied to any other kind of robot device.

**Claims**

1.  A method (200) for controlling a robot device (102), the method (200) comprising:

    • determining, using sensor data (312) which represent a surrounding of the robot device (102), whether there are one or more humans (106) in the surrounding of the robot device (102);
    • in the case that it is determined that there are one or more humans (106) in the surrounding of the robot device (102), determining for each human of the one or more humans (106):

        ○ a respective body pose (308) and a respective velocity (310) of the human using the sensor data (312),
        ○ a respective predicted motion (306) of the human for a future time period using the sensor data (312),
        ○ using the respective body pose (308), the respective velocity (310), and the respective predicted motion (306), a respective occupation area (320) occupied by the human in the future time period; and

    • generating control parameters (322) for controlling the robot device (102) such that a predefined distance of the robot device (102) to the respective occupation area (320) of each of the one or more humans (106) is ensured in the future time period; and
    • controlling the robot device (102) in accordance with the control parameters (322).

2.  The method (200) according to claim 1, further comprising:

    • for each human of the one or more humans (106), determining a respective activity (312) of the human using the sensor data (312);
    • wherein generating the control parameters (322) comprises determining a velocity of the robot device (102) using the respective activity (312) of each of the one or more humans (106).

3.  The method (200) according to claim 2,
    wherein determining the velocity of the robot device (102) comprises

    • determining an average level of human activity in the surrounding of the robot device (102) using the respective activity (312) of each of the one or more humans (106); and
    • determining, using the average level of human activity, the velocity of the robot device (102) by decreasing a predefined robot velocity with an increasing average level of human activity.

4. The method (200) according to any one of claims 1 to 3,
wherein determining the respective occupation area (320) occupied by the human at a point in time in the future time period comprises:

• determining, using the respective body pose (308) of the human, a respective body pose area occupied by the human; and
• determining, using the respective velocity (310) of the human, the respective occupation area (320) by increasing the respective body pose area with increasing velocity of the human.

5. The method (200) according to claim 4,

wherein determining the respective body pose area (308) occupied by the human comprises:

• projecting a respective two-dimensional ellipse onto a ground on which the robot device (102) is positioned, the two-dimensional ellipse bounding the respective body pose of the human in a plan view; and

wherein determining the respective occupation area (320) comprises:

• increasing a size of the respective two-dimensional ellipse as a function of the respective velocity (310) of the human, wherein the size of the respective two-dimensional ellipse increases with increasing velocity of the human.

6. A robot device controller (108) configured to carry out the method (200) of any one of claims 1 to 5.

7. A robot device (102), comprising:

• the robot device controller (108) according to claim 6; and
• at least one perception sensor (116) configured to acquire the sensor data (312) representing the surrounding of the robot device (102).

8. A computer program comprising instructions which, when executed by a computer, causes the computer to carry out the method (200) according to any one of claims 1 to 5.

9. A computer-readable medium comprising instructions which, when executed by a computer, causes the computer to carry out the method (200) according to any one of claims 1 to 5.

**Amended claims in accordance with Rule 137(2) EPC.**

1. A method (200) for controlling a robot device (102), the method (200) comprising:

- determining, using sensor data (312) which represent a surrounding of the robot device (102), whether there are one or more humans (106) in the surrounding of the robot device (102);
- in the case that it is determined that there are one or more humans (106) in the surrounding of the robot device (102), for each human of the one or more humans (106):
- determining a respective body pose (308) and a respective velocity (310) of the human using the sensor data (312),
- determining a respective predicted motion (306) of the human for a future time period using the sensor data (312),
- using the respective body pose (308), the respective velocity (310), and the respective predicted motion (306), determining a respective occupation area (320) occupied by the human in the future time period,
- determining a respective activity (312) of the human using the sensor data (312); and
- generating, using a model predictive control planner, control parameters (322) for controlling the robot device (102), wherein the model predictive control planner uses a predefined distance of the robot device (102) to the respective occupation area (320) of each of the one or more humans (106) in the future time period as a distance constraint, and wherein the model predictive control planner determines a velocity of the robot device (102) using the respective activity (312) of each of the one or more humans (106); and

- controlling the robot device (102) in accordance with the control parameters (322).

2. The method (200) according to claim 1,
   wherein determining the velocity of the robot device (102) comprises

   - determining an average level of human activity in the surrounding of the robot device (102) using the respective activity (312) of each of the one or more humans (106); and
   - determining, using the average level of human activity, the velocity of the robot device (102) by decreasing a predefined robot velocity with an increasing average level of human activity.

3. The method (200) according to any one of claims 1 to 2,
   wherein determining the respective occupation area (320) occupied by the human at a point in time in the future time period comprises:

   - determining, using the respective body pose (308) of the human, a respective body pose area occupied by the human; and
   - determining, using the respective velocity (310) of the human, the respective occupation area (320) by increasing the respective body pose area with increasing velocity of the human.

4. The method (200) according to claim 3,

   wherein determining the respective body pose area (308) occupied by the human comprises:

   - projecting a respective two-dimensional ellipse onto a ground on which the robot device (102) is positioned, the two-dimensional ellipse bounding the respective body pose of the human in a plan view; and

   wherein determining the respective occupation area (320) comprises:

   - increasing a size of the respective two-dimensional ellipse as a function of the respective velocity (310) of the human, wherein the size of the respective two-dimensional ellipse increases with increasing velocity of the human.

5. A robot device controller (108) configured to carry out the method (200) of any one of claims 1 to 4.

6. A robot device (102), comprising:

   - the robot device controller (108) according to claim 5; and
   - at least one perception sensor (116) configured to acquire the sensor data (312) representing the surrounding of the robot device (102).

7. A computer program comprising instructions which, when executed by a computer, causes the computer to carry out the method (200) according to any one of claims 1 to 4.

8. A computer-readable medium comprising instructions which, when executed by a computer, causes the computer to carry out the method (200) according to any one of claims 1 to 4.

Fig. 1

Fig. 2

300

302

304

306    308

310    312

314

316  ↔  318

320

322

**Fig. 3**

Fig. 4

Fig. 5

**Europäisches Patentamt**
**European Patent Office**
**Office européen des brevets**

# EUROPEAN SEARCH REPORT

**Application Number**

EP 24 17 1689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRUNO BRITO ET AL: "Model Predictive Contouring Control for Collision Avoidance in Unstructured Dynamic Environments", ARXIV.ORG, CORNELL UNIVERSITY LIBRARY, 201 OLIN LIBRARY CORNELL UNIVERSITY ITHACA, NY 14853, 20 October 2020 (2020-10-20), XP081790845, * paragraphs [00II], [0III], [00IV] * | 1-9 | INV. G05D1/633 G05D1/243 G05D1/249 G05D1/65 G05D105/28 G05D101/20 G05D107/70 G05D109/10 |
| A | NORIAKI HIROSE ET AL: "SACSoN: Scalable Autonomous Control for Social Navigation", ARXIV.ORG, CORNELL UNIVERSITY LIBRARY, 201 OLIN LIBRARY CORNELL UNIVERSITY ITHACA, NY 14853, 28 July 2023 (2023-07-28), XP091573906, * paragraphs [0III] - [000V] * | 1-9 | G05D111/10 G06V20/00 |
| A | XU YIFAN ET AL: "SoLo T-DIRL: Socially-Aware Dynamic Local Planner based on Trajectory-Ranked Deep Inverse Reinforcement Learning", 2023 IEEE INTERNATIONAL CONFERENCE ON ROBOTICS AND AUTOMATION (ICRA), IEEE, 29 May 2023 (2023-05-29), pages 12045-12051, XP034369645, DOI: 10.1109/ICRA48891.2023.10160536 [retrieved on 2023-07-04] * paragraphs [0IIC], [0III], [00IV] * | 1-9 | |

**TECHNICAL FIELDS SEARCHED (IPC)**

G05D

The present search report has been drawn up for all claims

| Place of search | Date of completion of the search | Examiner |
|---|---|---|
| The Hague | 6 June 2024 | Groen, Fokke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. HEUER et al.** Proactive Model Predictive Control with Multi-Modal Human Motion Prediction in Cluttered Dynamic Environments. *IEEE/RJS International Conference on Intelligent RObots and Systems*, 2023